# DEMANDE DE BREVET EUROPEEN

(11) **EP 4 206 830 A1**
(43) Date de publication de la demande: **05.07.2023**
(21) Numéro de dépôt: 22201436.7
(22) Date de dépôt: 13.10.2022
(51) Int. Cl.: G04B 37/22, A44C 27/00, G04B 19/18

(54) **ÉLÉMENT POUR PIÈCE D'HORLOGERIE OU DE BIJOUTERIE ET PROCÉDÉ DE FABRICATION D'UN TEL ÉLÉMENT**

(30) Priorité: 28.12.2021 EP 21217928
(71) Demandeur: Montres Breguet S.A., 1344 L'Abbaye (CH)
(72) Inventeur: KARAPATIS, Polychronis Nakis, 1324 Premier (CH); GERMOND, Lucien, 1429 Giez (CH); CHAPPUIS, Adrien, 1148 L'Isle (CH)
(74) Mandataire: ICB SA

(57) **Abrégé**

L'invention concerne un composant pour pièce d'horlogerie ou de bijouterie réalisé au moyen d'un matériau composite à matrice polymère renforcée par des fibres, ce composant comprenant sur l'une au moins de ses faces (2) au moins une cavité (4) dans laquelle est logé un insert (6) réalisé en verre métallique.

L'invention concerne également un procédé de fabrication d'un tel composant.

## Description

### Domaine technique de l'invention

La présente invention concerne un élément d'habillage pour pièce d'horlogerie ou de bijouterie. La présente invention concerne également un procédé de fabrication d'un tel élément d'habillage.

### Arrière-plan technologique

De nombreux procédés de fabrication d'éléments d'habillage pour des pièces d'horlogerie ou de bijouterie tels que fond, carrure, lunette ou bien encore maillons de bracelet ont déjà été proposés. Parmi ces procédés de fabrication connus, on peut citer les procédés de fabrication de tels éléments d'habillage au moyen de matériaux composites obtenus par dispersion de fibres dans une matrice polymère. Des exemples de ces matériaux composites sont par exemple donnés par les matrices polymères dans lesquels sont dispersées des fibres de carbone, également connus sous leur dénomination anglo-saxonne Carbon Fiber Reinforced Polymers ou CFRP.

A l'usage, on a observé que les éléments d'habillage pour pièces d'horlogerie ou de bijouterie réalisés au moyen de tels matériaux composites souffraient régulièrement de deux défauts majeurs : une résistance mécanique aux agressions extérieures médiocre et une faible brillance. En effet, les matrices polymères dans lesquelles étaient dispersées les fibres de carbone se sont révélées relativement tendres et facilement rayables. Dès lors, réaliser des décors ou des reliefs sur des éléments d'habillage obtenus au moyen de tels matériaux composites s'est révélé une solution technique peu durable. Par ailleurs, l'aspect mat des éléments d'habillage obtenus au moyen de matériaux composites du type à matrice polymère renforcée au moyen de fibres de carbone rendait l'utilisation de tels éléments pour l'habillage d'une montre haut de gamme difficilement envisageable.

Pour remédier à ces problèmes, des solutions de substitution ont déjà été proposées. Pour la réalisation des éléments d'habillage les plus exposés aux agressions extérieures tels que lunettes et organes de commande du type couronnes ou bien encore poussoirs, on a eu recours aux matériaux métalliques ou céramiques. D'autres matériaux composites du type à matrice métallique et renfort en fibres ont aussi été utilisés. Plus récemment, il a aussi été proposé de réaliser des éléments d'habillage pour pièces d'horlogerie ou de bijouterie au moyen de matériaux composites couramment appelés « cermet » qui se composent d'un renfort en céramique et d'une matrice métallique.

Même si, du point de vue de la résistance mécanique des éléments d'habillage, des progrès ont pu être obtenus grâce à l'utilisation de matériaux composites à matrice métallique et à renfort en fibres ou en céramique, les éléments d'habillage résultants ne satisfont toujours pas complètement aux exigences dans le domaine de l'horlogerie et de la bijouterie pour ce qui est de la résistance mécanique de leurs décors ou reliefs. En effet, la technique habituellement employée pour réaliser des décors ou des reliefs sur ces éléments d'habillage consiste à combiner dépôt physique en phase vapeur (Physical Vapor Déposition ou PVD) et électroformage et ne permet d'obtenir que des couches très minces. Par conséquent, bien que de telles couches minces soient métalliques et aient donc un aspect plus brillant, leur épaisseur est si faible que la résistance mécanique de ces couches minces aux frottements et à l'usure est médiocre.

Une autre technique encore pour décorer par exemple une lunette de montre-bracelet a été proposée dans la demande de brevet européen EP2315673A1. Succinctement résumée, cette technique consiste à se munir d'une lunette par exemple en céramique à la surface de laquelle sont ménagées des creusures pour recevoir par exemple des index horaires. On dépose ensuite sur la surface de la lunette un boudin annulaire en métal amorphe. Puis ce boudin de métal amorphe est chauffé à une température supérieure à sa température de transition vitreuse Tg et pressé de façon que le métal amorphe pénètre dans les creusures. Par la suite, le métal amorphe est refroidi et le surplus de matière est enlevé.

Cette technique permet avantageusement d'obtenir des éléments d'habillage pour pièces d'horlogerie avec des décors massifs plus résistants aux contraintes mécaniques et à l'usure. Cette technique qui nécessite la préparation d'un boudin de métal amorphe, le chauffage, le pressage puis le refroidissement de ce dernier, et enfin l'élimination du métal amorphe en excès à la surface de l'élément d'habillage, est cependant longue à mettre en œuvre et donc coûteuse.

### Résumé de l'invention

La présente invention a pour but de pallier les inconvénients mentionnés ci-dessus ainsi que d'autres encore en procurant des éléments d'habillage pour pièces d'horlogerie ou de bijouterie réalisés dans un matériau qui répond pleinement aux exigences en vigueur dans le domaine de l'horlogerie et de la bijouterie, notamment en termes de résistance mécanique et d'esthétique. La présente invention procure également un procédé pour la fabrication de tels éléments d'habillage.

A cet effet, la présente invention concerne un élément d'habillage pour pièce d'horlogerie ou de bijouterie réalisé au moyen d'un matériau composite à matrice polymère renforcée par des fibres, cet élément d'habillage comprenant sur l'une au moins de ses faces au moins une cavité dans laquelle est logé un insert réalisé en verre métallique.

Selon une forme spéciale d'exécution de l'invention, le matériau polymère utilisé pour former la matrice est thermoplastique ou thermodurcissable.

Selon une autre forme spéciale d'exécution de l'invention, le matériau polymère est choisi dans le groupe formé par le polyétheréthercétone (PEEK), le polytétrafluoroéthylène (PTFE) et le polyamide-imide (PAI).

Selon encore une autre forme spéciale d'exécution de l'invention, les fibres qui renforcent la matrice polymère sont choisies dans le groupe formé par les fibres de verre, les fibres de carbone et les fibres d'aramide.

Selon encore une autre forme spéciale d'exécution de l'invention, le verre métallique utilisé pour réaliser l'insert est du type massif (Bulk Metallic Glass ou BMG).

Selon encore une autre forme spéciale d'exécution de l'invention, le verre métallique utilisé pour réaliser l'insert renferme du zirconium ou du platine.

Selon encore une autre forme spéciale d'exécution de l'invention, le verre métallique utilisé pour réaliser l'insert résulte, aux impuretés inévitables près, d'un alliage de zirconium, de cuivre, de titane, de nickel, d'aluminium et de niobium.

Selon encore une autre forme spéciale d'exécution de l'invention, le verre métallique utilisé pour réaliser l'insert comprend, en pourcentage massique, du zirconium, du cuivre, du titane, du nickel, de l'aluminium et du niobium selon les quantités suivantes :
- 60 ≤ Zr ≤ 75
- 10 ≤ Cu ≤ 20
- 0 ≤ Ti ≤ 6
- 7 ≤ Ni ≤ 15
- 0 ≤ Al ≤ 8
- 0 ≤ Nb ≤ 6

Selon encore une autre forme d'exécution de l'invention, le verre métallique utilisé pour réaliser l'insert est l'alliage Vit106a de composition Zr70Cu13Ni9.9Al3.65Nb3.4 en pourcentage massique, ou le Vit105 de composition Zr65.7Cu15.6Ni11,7Al3.7Ti3.3 en pourcentage massique.

Selon encore une autre forme spéciale d'exécution de l'invention, le verre métallique utilisé pour réaliser l'insert résulte, aux impuretés inévitables près, d'un alliage de platine, de cuivre, de nickel et de phosphore.

Selon encore une autre forme spéciale d'exécution de l'invention, le verre métallique utilisé pour réaliser l'insert comprend, en pourcentage massique, du platine, du cuivre, du nickel et du phosphore selon les quantités suivantes :
- 80 ≤ Pt ≤ 90
- 5 ≤ Cu ≤ 10
- 1 ≤ Ni ≤ 3
- 4 ≤ P ≤ 7

Selon encore une autre forme d'exécution de l'invention, le verre métallique utilisé pour réaliser l'insert est, en pourcentage massique, donné par la composition Pt85Cu7Ni2.3P5.7.

Selon encore une autre forme spéciale d'exécution de l'invention, le verre métallique utilisé pour réaliser l'insert présente une température de transition vitreuse inférieure ou égale à 350°C.

Selon encore une autre forme spéciale d'exécution de l'invention, l'élément d'habillage pour pièce d'horlogerie ou de bijouterie est un fond, une carrure, une lunette, un maillon de bracelet ou un fermoir.

La présente invention concerne également un procédé de fabrication d'un élément d'habillage pour pièce d'horlogerie ou de bijouterie comprenant les étapes de :
- réaliser l'élément d'habillage au moyen d'un matériau composite à matrice polymère renforcée par des fibres ;
- usiner dans l'une au moins des faces de l'élément d'habillage au moins une cavité ;
- porter un verre métallique à sa température de fusion ;
- remplir la au moins une cavité de verre métallique par injection pour former un insert ;
- effectuer, si nécessaire, des opérations de finissage.

Selon une forme spéciale d'exécution de l'invention, la cavité est réalisée par fraisage.

Selon encore une autre forme spéciale d'exécution de l'invention, les opérations de finissage consistent en un enlèvement de la matière en excès, en un polissage et/ou en un ébavurage de l'insert.

Grâce à ces caractéristiques, la présente invention procure des éléments d'habillage pour pièces d'horlogerie ou de bijouterie qui sont revêtus extérieurement d'un ou de plusieurs inserts tels que des index horaires, des chiffres, un logotype ou tout autre inscription à caractère technique ou de fantaisie. Ces inserts, réalisés par injection d'un verre métallique, se présentent sous la forme de blocs massifs et ont donc une excellente résistance mécanique aux frottements et à l'usure. Ils ont d'autre part un aspect qui est en accord avec les exigences esthétiques en vigueur dans les domaines de l'horlogerie et de la bijouterie. En effet, étant donné que ces inserts sont épais, il est possible de les soumettre à tous types d'opérations de finissage pour leur donner un éclat métallique brillant. De même, ces inserts sont réalisés en une unique étape d'injection d'un verre métallique, ce qui permet de réaliser un gain de temps et d'argent notable, et de garantir une excellente précision de fabrication de ces inserts. A toutes fins utiles, on notera que, pour les besoins de la présente description, on entend par « verre métallique » la gamme des alliages métalliques qui possèdent la particularité de pouvoir être solidifiés à l'état au moins partiellement amorphe, c'est-à-dire sans arrangement d'atomes régulier. Les verres métalliques se distinguent donc nettement des métaux traditionnels qui, eux, cristallisent selon des structures ordonnées telles que, notamment, cubique simple, centrée ou faces centrées ou bien encore hexagonale ainsi que les variantes de ces structures. Ces verres métalliques sont généralement issus d'alliages ternaires, quaternaires ou plus dont l'aptitude à solidifier à l'état amorphe découle de la combinaison d'éléments qui présentent entre eux une incompatibilité dimensionnelle telle que, à partir d'une vitesse de refroidissement donnée, la cinétique de solidification est suffisamment lente pour permettre d'obtenir une structure cristallographique solide désordonnée. Le comportement de cette famille de matériaux permet une mise en oeuvre similaire à celle des matériaux polymères telle que le moulage par injection ou le formage à chaud. Cette famille de matériaux a notamment pour avantage de présenter une résistance à la corrosion améliorée, une dureté élevée et un comportement élastique qui limite les pertes mécaniques internes.

### Brève description des figures

D'autres caractéristiques et avantages de la présente invention ressortiront plus clairement de la description détaillée qui suit d'un mode de réalisation d'un élément d'habillage pour pièce d'horlogerie ou de bijouterie conforme à l'invention, cet exemple étant donné à titre purement illustratif et non limitatif seulement en liaison avec le dessin annexé sur lequel :
- la figure 1 est une vue de dessus d'une lunette de montre conforme à l'invention ;
- la figure 2 est une vue en coupe selon la ligne B-B de la figure 1.

### Description détaillée de l'invention

La présente invention procède de l'idée générale inventive qui consiste à procurer des éléments d'habillage pour une pièce d'horlogerie ou de bijouterie qui présentent des caractéristiques mécaniques et esthétiques répondant aux exigences requises dans le domaine de la fabrication horlogère. A cet effet, la présente invention enseigne de réaliser de tels éléments d'habillage au moyen d'un matériau composite à matrice polymère renforcée par des fibres, puis de ménager en surface de tels éléments d'habillage au moins une cavité dans laquelle va être logé un insert à caractère décoratif ou fonctionnel réalisé en verre métallique. Grâce à l'utilisation d'un matériau composite à matrice polymère renforcée par des fibres, l'élément d'habillage selon l'invention présente des caractéristiques de résistance mécanique à l'usure et esthétiques qui le rendent parfaitement approprié pour des applications horlogères. D'autre part, les inserts, réalisés par injection d'un verre métallique, forment des plots massifs ayant une épaisseur suffisante pour leur permettre de résister aux agressions mécaniques extérieures. De plus, étant donné que ces inserts sont épais, ils supportent sans difficulté les opérations de finissage qui vont leur donner le maximum de brillance et d'éclat. Enfin, la réalisation des inserts se fait en une unique étape d'injection, ce qui permet de réaliser un gain de temps considérable et de garantir une excellente précision de fabrication de ces inserts.

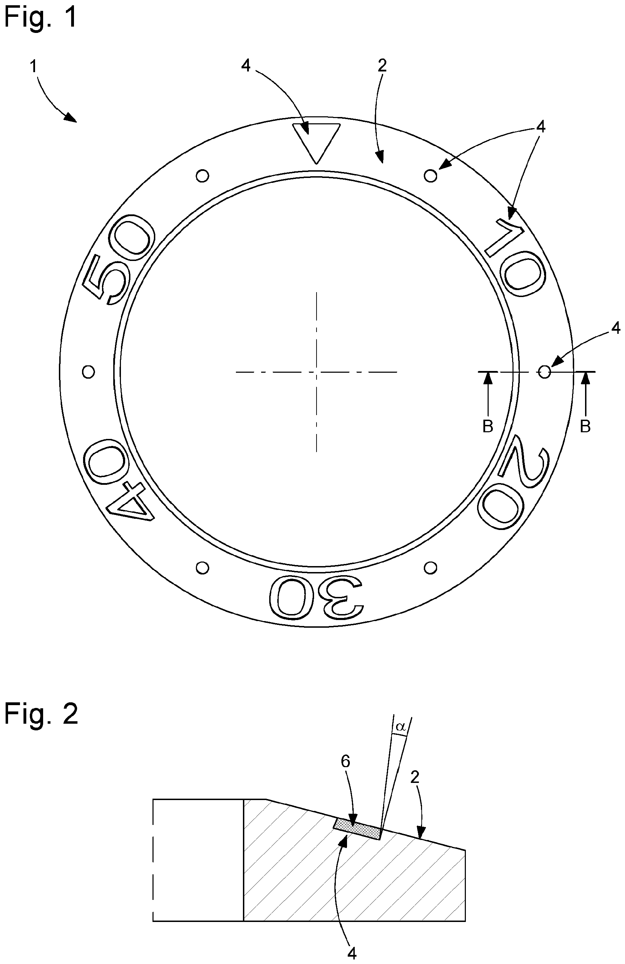

Désignée dans son ensemble par la référence numérique générale 1, la lunette représentée sur la figure 1 est un exemple d'un élément d'habillage pour une pièce d'horlogerie conforme à l'invention. D'autres éléments d'habillage tels que fond, carrure, maillons et fermoir de bracelet sont également envisageables.

Conformément à l'invention, la lunette 1 est réalisée au moyen d'un matériau composite à matrice polymère renforcée par des fibres. A titre d'exemple illustratif et non limitatif seulement, le matériau polymère utilisé pour former la matrice est thermoplastique ou thermodurcissable. Ce matériau polymère est préférentiellement choisi dans le groupe formé par le polyétheréthercétone (PEEK), le polytétrafluoroéthylène (PTFE) et le polyamide-imide (PAI). Cette matrice est renforcée par des fibres qui sont préférentiellement choisies dans le groupe formé par les fibres de verre, les fibres de carbone et les fibres d'aramide. Une pluralité de ces lunettes 1 peut être individualisée dans une plaque de matériau composite d'épaisseur requise.

A titre d'exemple, un élément d'habillage tel qu'une lunette 1 conforme à l'invention peut être produit par un procédé d'enroulement filamentaire de type SPIDE TP qui a été mis au point par le centre d'expertise mécanique français CETIM. Très succinctement expliqué, ce procédé d'enroulement filamentaire consiste à enrouler des fibres préalablement imprégnées d'un matériau polymère sur un moule, par exemple tel qu'un tube de section cylindrique, afin d'obtenir un profilé. En même temps que ces fibres pré-imprégnées de polymère sont enroulées autour du moule selon un nombre de couches donné et selon un angle par rapport à l'axe de symétrie longitudinale du moule qui est choisi notamment en fonction de l'utilisation ultérieure des pièces résultantes qui seront obtenues par découpe du profilé, elles sont chauffées à une température suffisamment élevée pour provoquer la fusion du polymère dont elles sont imprégnées et pressées contre le moule. Finalement, les pièces résultantes sont usinées de manière conventionnelle au moyen de tours et de fraiseuses pour les amener à leurs cotes finales.

Dans le cas de la présente invention, les lunettes 1 sont découpées dans un profilé tubulaire dont le diamètre intérieur est typiquement de l'ordre de 30 mm et dont le diamètre extérieur est de 45 mm. Le profilé tubulaire dans lequel les lunettes 1 selon l'invention sont découpées est obtenu par enroulement de fibres de carbone dont le diamètre est typiquement de l'ordre de 5 à 25µm et qui sont imprégnées de polyétheréthercétone (PEEK) dont la température de fusion est de 341°C. Pour obtenir les profilés tubulaires recherchés dans lesquels les lunettes 1 selon l'invention vont être ultérieurement découpées, les fibres de carbone sont préférentiellement enroulées selon un angle de 90° perpendiculairement à l'axe de symétrie longitudinale du profilé tubulaire.

Les profilés tubulaires utilisés pour produire notamment les lunettes 1 sont typiquement composés d'environ 35% de polymère PEEK et de 65% de fibres de carbone à plus ou moins 10% près. On comprend donc que les éléments d'habillage obtenus à partir de ces profilés tubulaires renferment une grande proportion de fibres de carbone, ce qui améliore sensiblement leur conductivité thermique et leur permet de rapidement diffuser la chaleur apportée lors de l'injection du verre métallique. Par conséquent, bien que la température à laquelle le verre métallique est injecté soit supérieure à la température de fusion de la matrice polymère, les lunettes 1 ne se décomposeront pas, pas plus qu'elles ne se déformeront. On notera également que l'épaisseur réduite des inserts injectés combinée à la bonne conductivité thermique du moule et du matériau composite réduisent considérablement le temps d'exposition du polymère à une température plus élevée que son point de fusion. Par conséquent, il n'est pas nécessaire de prendre des mesures supplémentaires particulières pour limiter la dégradation du polymère lors du bref contact avec le verre métallique. Les parties visibles du composite ayant potentiellement été en contact avec le verre métallique seront d'ailleurs retirées lors des opérations de finition de surface après la sortie du moule.

La lunette 1 comprend sur une face supérieure 2 une ou plusieurs cavités 4 typiquement réalisées par fraisage. Selon l'invention, ces cavités 4 vont être garnies au moyen d'un matériau du type verre métallique pour former des inserts 6. Non limitativement, comme visible sur la figure 1, ces inserts 6 matérialisent des chiffres et des index par exemple de forme triangulaire ou circulaire. De préférence, ces cavités 4 présentent un angle de contre-dépouille α compris entre 5 et 10° pour assurer une meilleure tenue mécanique des inserts 6.

Le verre métallique utilisé pour réaliser les inserts 6 est du type massif (Bulk Metallic Glass ou BMG). De préférence, ce verre métallique renferme du zirconium. On peut par exemple utiliser un alliage renfermant, aux impuretés inévitables près, du zirconium, du cuivre, du titane, du nickel, de l'aluminium et du niobium. Selon un exemple non limitatif, le verre métallique utilisé pour réaliser l'insert comprend ces matériaux en pourcentage massique selon les quantités suivantes :
- 60 ≤ Zr ≤ 75
- 10 ≤ Cu ≤ 20
- 0 ≤ Ti ≤ 6
- 7 ≤ Ni ≤ 15
- 0 ≤ Al ≤ 8
- 0 ≤ Nb ≤ 6

Un exemple d'un verre métallique renfermant du zirconium qui convient bien aux besoins de l'invention est l'alliage Vit106a de composition Zr70Cu13Ni9.9Al3.65Nb3.4 en pourcentage massique, ou Vit105 de composition Zr65.7Cu15.6Ni11,7Al3.7Ti3.3 en pourcentage massique.

Le verre métallique utilisé pour réaliser les inserts 6 peut aussi être à base de platine. On peut, par exemple, utiliser un alliage renfermant, aux impuretés inévitables près, du platine, du cuivre, du nickel, de l'aluminium et du phosphore. Selon un exemple non limitatif, le verre métallique utilisé pour réaliser l'insert comprend ces matériaux en pourcentage massique selon les quantités suivantes :
- 80 ≤ Pt ≤ 90
- 5 ≤ Cu ≤ 10
- 1 ≤ Ni ≤ 3
- 4 ≤ P ≤ 7

Selon encore une autre forme d'exécution de l'invention, le verre métallique utilisé pour réaliser l'insert est, en pourcentage massique, donné par la composition Pt85Cu7Ni2.3P5.7.

Selon encore une autre forme spéciale d'exécution de l'invention, le verre métallique utilisé pour réaliser l'insert présente une température de transition vitreuse inférieure ou égale à 350°C.

Selon l'invention, pour former les inserts 6, les cavités 4 sont remplies de verre métallique par injection. A cette fin, on se munit d'un lingot de verre métallique que l'on place dans une chambre de fonte et que l'on porte à une température supérieure à sa température de fusion. Une fois le lingot de verre métallique fondu, le verre métallique est injecté dans un moule dans lequel est placée la lunette 1 et qui est agencé de façon que le verre métallique remplisse les cavités 4 de cette lunette 1. L'injection du verre métallique dans le moule dans lequel est placée la lunette 1 peut être assurée par pression mécanique fournie par un piston ou par pression d'un gaz. Les cavités 4 sont préférentiellement remplies avec une légère surépaisseur de verre métallique de façon à assurer une liaison optimale entre la lunette 1 et les inserts 6.

Après refroidissement du verre métallique, la lunette 1 est sortie de son moule et peut être soumise à des opérations de finissage telles que l'enlèvement de la matière en excès, le meulage et/ou le polissage mécanique ou chimique. Les surépaisseurs et bavures éventuelles sont également supprimées par ébavurage.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées. On comprendra en particulier que, dans le cadre de l'invention, il est nécessaire de porter momentanément le verre métallique à sa température de fusion afin qu'il puisse être injecté au moyen d'une machine d'injection.

### Nomenclature

- 1.: Lunette
- 2.: Face supérieure
- 4.: Cavités
- 6.: Inserts

## Revendications

1. Elément d'habillage ou composant pour pièce d'horlogerie ou de bijouterie réalisé au moyen d'un matériau composite à matrice polymère renforcée par des fibres, cet élément d'habillage comprenant sur l'une au moins de ses faces (2) au moins une cavité (4) dans laquelle est logé un insert (6) réalisé en verre métallique.

2. Elément d'habillage ou composant selon la revendication 1, **caractérisé en ce que** le matériau polymère utilisé pour former la matrice est thermoplastique ou thermodurcissable.

3. Elément d'habillage ou composant selon la revendication 2, **caractérisé en ce que** le matériau polymère est choisi dans le groupe formé par le polyétheréthercétone (PEEK), le polytétrafluoroéthylène (PTFE) et le polyamide-imide (PAI).

4. Elément d'habillage ou composant selon l'une des revendications 2 et 3, **caractérisé en ce que** les fibres qui renforcent la matrice polymère sont choisies dans le groupe formé par les fibres de verre, les fibres de carbone et les fibres d'aramide.

5. Elément d'habillage selon la revendication 4 lorsqu'elle dépend de la revendication 3, **caractérisé en ce que** le matériau composite utilisé est composé de 35% de polymère PEEK et de 65% de fibres de carbone à plus ou moins 10% près.

6. Elément d'habillage ou composant selon l'une des revendications 1 à 5, **caractérisé en ce que** le verre métallique utilisé pour réaliser l'insert est du type massif ou Bulk Metallic Glass ou BMG.

7. Elément d'habillage ou composant selon la revendication 6, **caractérisé en ce que** le verre métallique utilisé pour réaliser l'insert renferme du zirconium ou du platine.

8. Elément d'habillage ou composant selon la revendication 7, **caractérisé en ce que** le verre métallique utilisé pour réaliser l'insert résulte, aux impuretés inévitables près, d'un alliage de zirconium, de cuivre de nickel, d'aluminium et/ou de niobium et/ou de titane.

9. Elément d'habillage ou composant selon la revendication 8, **caractérisé en ce que** le verre métallique utilisé pour réaliser l'insert comprend, en pourcentage massique, du zirconium, du cuivre, du titane, du nickel, de l'aluminium et du niobium selon les quantités suivantes :
- 60 ≤ Zr ≤ 75
- 10 ≤ Cu ≤ 20
- 0 ≤ Ti ≤ 6
- 7 ≤ Ni ≤ 15
- 0 ≤ Al ≤ 8
- 0 ≤ Nb ≤ 6

10. Elément d'habillage ou composant selon la revendication 9, **caractérisé en ce que** le verre métallique utilisé pour réaliser l'insert est un alliage de composition Zr70Cu13Ni9.9AI3.65 Nb3.4 en pourcentage massique, ou un alliage de composition Zr65.7Cu15.6Ni11.7Al3.7Ti3.3 en pourcentage massique.

11. Elément d'habillage ou composant selon la revendication 7, **caractérisé en ce que** le verre métallique utilisé pour réaliser l'insert comprend, en pourcentage massique, du platine, du cuivre, du nickel et du phosphore selon les quantités suivantes :
- 80 ≤ Pt ≤ 90
- 5 ≤ Cu ≤ 10
- 1 ≤ Ni ≤ 3
- 4 ≤ P ≤ 7

12. Elément d'habillage ou composant selon la revendication 11, **caractérisé en ce que** le verre métallique utilisé pour réaliser l'insert est, en pourcentage massique, donné par la composition Pt85Cu7Ni2.3P5.7.

13. Elément d'habillage ou composant selon l'une des revendications 6 à 12, **caractérisé en ce que** le verre métallique utilisé pour réaliser l'insert présente une température de transition vitreuse inférieure ou égale à 350°C.

14. Elément d'habillage ou composant selon l'une des revendications 1 à 13, **caractérisé en ce que** l'élément d'habillage pour pièce d'horlogerie ou de bijouterie est un fond, une carrure, une lunette (1), un maillon de bracelet ou un fermoir.

15. Procédé de fabrication d'un élément d'habillage ou composant pour pièce d'horlogerie ou de bijouterie comprenant les étapes de :
- réaliser l'élément d'habillage ou composant au moyen d'un matériau composite à matrice polymère renforcée par des fibres ;
- usiner dans l'une au moins des faces (2) de l'élément d'habillage ou composant au moins une cavité (4) ;
- porter un verre métallique à sa température de fusion ;
- remplir la au moins une cavité (4) de verre métallique par injection pour former un insert (6) ;
- effectuer, si nécessaire, des opérations de finissage.

16. Procédé de fabrication selon la revendication 15, **caractérisé en ce que** la cavité est réalisée par fraisage.

17. Procédé de fabrication selon la revendication 16, **caractérisé en ce que** les opérations de finissage consistent en un enlèvement de la matière en excès, en un polissage mécanique et/ou chimique et/ou en un ébavurage de l'insert (6).

18. Procédé de fabrication selon l'une des revendications 1 à 17, **caractérisé en ce que** les cavités (4) présentent un angle de contre-dépouille (a) compris entre 5 et 10°.
